Europäisches Patentamt

European Patent Office

Office européen des brevets

(11) Publication number: **0 136 487**
**B1**

# EUROPEAN PATENT SPECIFICATION

(45) Date of publication of patent specification: **25.01.89**

(51) Int. Cl.⁴: **B 60 J 1/10**

(21) Application number: **84109520.1**

(22) Date of filing: **09.08.84**

(54) **Mounting construction of window sealed glass.**

(30) Priority: **02.09.83 JP 137010/83 u**
**02.09.83 JP 137011/83 u**

(43) Date of publication of application:
**10.04.85 Bulletin 85/15**

(45) Publication of the grant of the patent:
**25.01.89 Bulletin 89/04**

(84) Designated Contracting States:
**DE FR GB**

(56) References cited:
**EP-A-0 096 128**
**DE-A-1 530 749**
**FR-A-2 369 448**
**GB-A-2 037 859**
**JP-A-60 033 123**

(73) Proprietor: **TOYOTA JIDOSHA KABUSHIKI KAISHA**
**1, Toyota-cho Toyota-shi**
**Aichi-ken 471 (JP)**

(72) Inventor: **Fujikawa, Yoshihiro**
**101-5, Katahira Ohshima-cho**
**Toyota-shi Aichi 473 (JP)**

(74) Representative: **Grams, Klaus Dieter, Dipl.-Ing. et al**
**Patentanwaltsbüro Tiedtke-Bühling-Kinne-Grupe-Pellmann-Grams-Struif Winter-Roth Bavariaring 4**
**D-8000 München 2 (DE)**

Courier Press, Leamington Spa, England.

## Description

The present invention relates to a mounting construction for a fixed window glass in a vehicle according to the preamble of claim 1.

Such a mounting construction for a fixed window glass in a vehicle as described in FR—A—2 369 448 comprises a retention member which is secured above a base plate portion to the vehicle body and has a side plate portion. The side plate portion resiliently contacts the window glass and serves for the alignment of the window glass in the plane thereof. In its lateral direction the window glass is glued to the vehicle body and from the outside a molding, which presses the window glass against the vehicle body, is attached to the retention member. The mounting construction for a fixed window glass according to FR—A—2 369 448 has the drawback that the mounting of the window glass by means of the side plate portion is relatively instable. Moreover the window glass must be accurately aligned prior to glueing the same to the vehicle body, which requires relatively great efforts. The molding projects far over the window glass, whereby a step is formed which represents a great drawback as to air resistance and design of the vehicle.

The problem underlying the subject matter of the invention is to create a mounting construction for a fixed window glass in a vehicle in which the height of the step formed between the window glass and the molding is reduced and by which a rigid mounting of the window glass can be simply attained.

This problem is solved according to the invention by the features contained in the characterizing portion of claim 1.

By the arrangement of a retention plate portion and a projection plate portion the window glass is safely held both at its inner surface and at its end face so that the movement of the window glass toward the interior of the vehicle body and the sliding is limited relative to the retention plate portion. Thus in a simple way an exact positioning of the window glass can be achieved. By fixing the molding to the retention member and by the fact that the panel portion of the molding member extends substantially parallel to the outer surface of the window glass the molding can serve for covering and supporting the window glass, wherein at the same time only a slight gradation occurs between the outer surface of the window glass and the molding member. In this way the air resistance of the vehicle is substantially reduced at high speeds.

Advantageous further developments of the invention are the subject matter of the subclaims.

In the following the invention will be described in more detail with reference to the drawings attached hereto.

Fig. 1 is a perspective view showing a mounting construction for a fixed window glass according to an embodiment of the invention;

Fig. 2 is a sectional view taken along a line IV—IV of Fig. 1;

Fig. 3 is a perspective view showing a moulding member of the embodiment;

Fig. 4 is a perspective view showing a retention member of the embodiment.

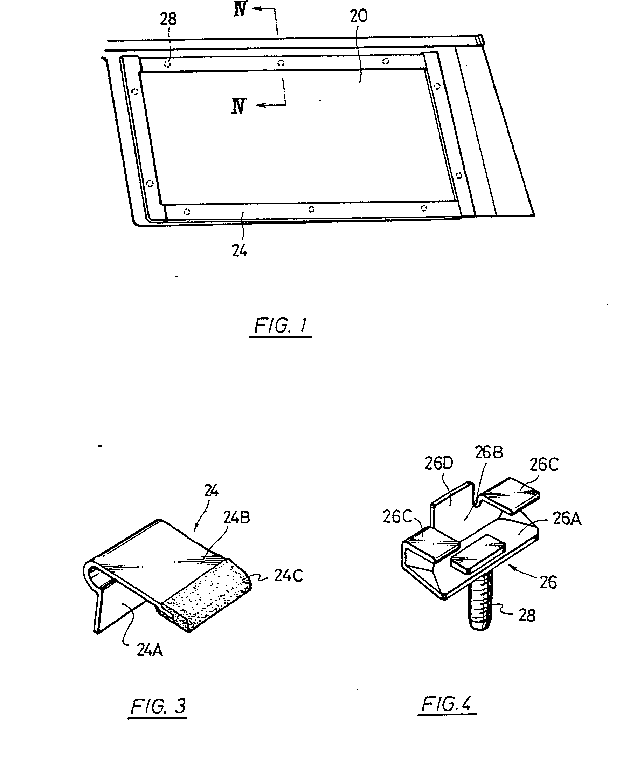

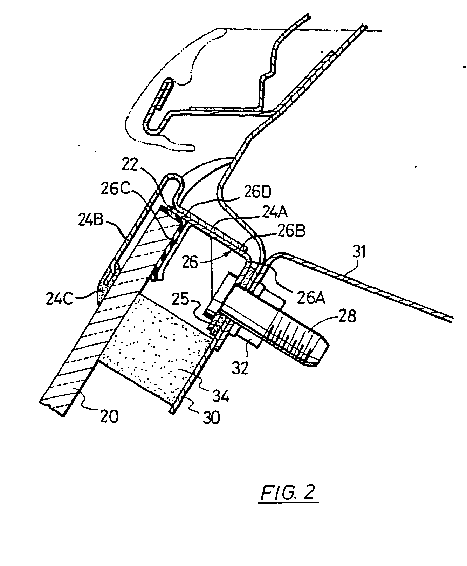

According to Fig. 1 a window glass 20 is fixed to a quarter portion of a vehicle body, to which a mounting construction according to the present invention is applied. Also, Fig. 2 is a sectional view of the mounting construction.

The window glass 20 is provided at its peripheral portion with a moulding member 24 which is made of stainless steel and has a base portion 24A and a panel portion 24B. That is to say, the moulding member 24 has a sectional configuration of a substantial L shape, as shown in Fig. 3. The moulding member 24 is fixed to its end periphery with a resinous trimming 24C for decorating the periphery of the window glass 20.

The moulding member 24 is fixed at its base portion 24A to a retention member 26 by a spot welding or the like, as shown in Fig. 2.

The retention member 26 has a base plate portion 26A provided with a bolt 28 as a fixing means and a side plate portion 26B extended substantially at a right angle from the base plate portion 26B. The side plate portion 26B is formed at its both side portions with a retention plate portion 26C defining a pair of support arms bent in such a direction that the retention plate portion 26C, the side plate portion 26B and the base plate portion 26A constitute a substantial channel shape, as shown in Figs. 2 and 4. Accordingly, the retention plate portion 26C and the moulding member 24 are positioned substantially in parallel with each other and the window glass 20 is received between the moulding member 24 and a cushion means 22 provided on the retention plate portion 26C. A projection portion 26D extends from the side plate portion 26B at an intermediate portion thereof as shown in Figs. 2 and 4, and abuts on the cushion means 22 extending along an end surface of the window glass 20.

The bolt 28 penetrates the retention member 26 and panels of a vehicle body 30 and 31, and it is fixed to the vehicle body 30 and 31 from inside thereof by a nut 32. In this connection, disposed between the base plate portion 26A of the retention member 26 and the vehicle body 30 and 31 is a sealer 25, or sealing material, for preventing water from permeating into the compartment of the vehicle. Disposed between the vehicle body 30 and the window glass 20 is a sealing means 34 for sealing a space therebetween. A conventional sealer, i.e., conventional sealing material for vehicle, can sufficiently be applied to the present invention.

The cushion means 22 is made of such an elastic body as a rubber or polyvinyl chloride resin.

As the embodiment is constructed in the above manner, the moulding 24 is not disposed at a largely projected position from the outer surface of the window glass 20 and a projected amount of the moulding member 24 is substantially reduced to only the thickness of the panel portion 24B of the moulding member 24. In addition, when an external force acts upon the outer surface of the window glass 20, the force can be substained by the retention plate portions 26C, and when an external force acts upon an inner surface thereof, it can also be substained by the moulding member 24. The projection plate portion 26D restricts the window glass 20 from sliding relative to the retention plate portion 26C. Accordingly, a sufficient strength can be obtained without using a weather strip or a resin clip in the embodiment.

In the embodiment ten sets of the retention member 26 and the bolt 28 are applied to the window glass 20, as shown in Fig. 1, but the number of sets can be determined in accordance with a size or a mounting condition of the window glass 20.

The configurations of the retention member 26 and the moulding member 24 are not limited only to those of the embodiment but they can be changed or modified appropriately, if necessary.

In the embodiment the retention member 26 is connected to the vehicle body 30 and 31 through the bolt 28 but another connecting means can also be applied to the present invention.

**Claims**

1. A mounting construction for a fixed window glass in a vehicle comprising:

a retention member (26) secured to a vehicle body (30, 31) for supporting said window glass (20), said retention member (26) having a base plate portion (26A) secured to said vehicle body (30, 31), and a side plate portion (26B) extending both outward from said base plate portion (26A) and between said vehicle body (30, 31) and said window glass (20),

a molding member (24) adapted to be rigidly attached to said retention member (26) and including a panel portion (24B) spaced outwardly of an outer surface of said window glass (20) for clamping said window glass (20) and limiting the movement of said window glass (20) away from said vehicle body (30, 31), and

sealing means (34) mounted between said window glass (20) and said vehicle body (30, 31) characterized in that

said retention member (26) also includes a retention plate portion (26C) extending from said side plate portion (26B) and aligned along an inner surface of said window glass (20) for limiting the movement of said window glass (20) toward said vehicle body (30, 31), and a projection plate portion (26D) extending from said side plate portion (26B) and terminating along an end surface of said window glass (20) proximate a junction of said outer and end surfaces, said projection plate portion (26D) being aligned along said end surface for restricting said window glass (20) from sliding relative to said retention plate portion (26C), and

that the panel portion (24B) of said molding member (24) extends substantially parallel to said outer surface of said window glass (20) for minimizing wind resistance when the vehicle is operated at increased speeds; said window glass (20) being clamped between said panel portion (24B) of said molding member (24) and said retention plate portion (26C) of said retention member (26).

2. The mounting construction as defined in claim 1, wherein said retention plate portion (26C) defines a pair of support arms spaced from said vehicle body (30, 31) and each having a planar surface substantially adjacent said inner surface of said window glass (20).

3. The mounting construction as defined in claim 1 or 2, wherein said retention member (26) includes cushion means (22) extending along said inner surface and said end surface and between said retention member (26) and said window glass (20).

4. The mounting construction as defined in one of the claims 1 to 3, wherein said molding member (24) includes a base portion (24A) adapted to be affixed to said retention member (26), said base portion (24A) being integrally formed with said panel portion (24B), said molding member (24) also including a resinous trimming (24C) secured to said panel portion (24B) to engage said outer surface of said window glass (20).

5. The mounting construction as defined in claim 4, wherein said base portion (24A) is substantially perpendicular to said panel portion (24B).

6. The mounting construction as defined in one of the claims 1 to 5, wherein said molding member (24) is attached to said retention member (26) along said projection plate portion (26D) and said side plate portion (26B).

**Patentansprüche**

1. Einsetzkonstruktion für eine befestigte Fensterscheibe eines Fahrzeugs, mit:

einem Halteelement (26), das zur Lagerung der Fensterscheibe (20) an einer Fahrzeugkarosserie (30, 31) angebracht ist und einen Basisplattenabschnitt (26A), der an der Fahrzeugkarosserie (30, 31) angebracht ist, sowie einen Seitenplattenabschnitt (26B) aufweist, der sich zwischen der Fahrzeugkarosserie (30, 31) und der Fensterscheibe (20) von dem Basisplattenabschnitt (26A) nach außen erstreckt,

einem Formteil (24), das fest an dem Halteelement (26) anbringbar ist und einen Scheibenabschnitt (24B) aufweist, der außerhalb einer Außenfläche der Fensterscheibe (20) angeordnet ist, um die Fensterscheibe (20) zu verklemmen und die von der Fahrzeugkarosserie (30, 31) weg gerichtete Bewegung der Fensterscheibe (20) zu begrenzen, und

einer Dichtung (34), die zwischen der Fensterscheibe (20) und der Fahrzeugkarosserie (30, 31) angebracht ist, dadurch gekennzeichnet, daß

das Halteelement (26) darüber hinaus einen Halteplattenabschnitt (26C), der von dem Seitenplattenabschnitt (26B) ausgeht und zur Begrenzung der zur Fahrzeugkarosserie (30, 31) gerichteten Bewegung der Fensterscheibe (20) entlang einer Innenfläche der Fensterscheibe (20) verläuft, und einen vorstehenden Plattenabschnitt (26D) aufweist, der von dem Seitenplattenabschnitt (26B) ausgeht und an einer Endfläche der Fensterscheibe (20) nahe dem Übergang zwischen der Außenfläche und der Endfläche endet, wobei der vorstehende Plattenabschnitt (26D) entlang der Endfläche verläuft, um die Fensterscheibe (20) an einer Verschiebung relativ zum Halteplattenabschnitt (26C) zu hindern und

daß der Scheibenabschnitt (24B) des Formteils (24) im wesentlichen parallel zur Außenfläche der Fensterscheibe (20) verläuft, um den Luftwiderstand zu minimieren, wenn das Fahrzeug mit hohen Geschwindigkeiten betrieben wird, wobei die Fensterscheibe (20) zwischen dem Scheibenabschnitt (24B) des Formteils (24) und dem Halteplattenabschnitt (26C) des Halteelementes (26) verklemmt ist.

2. Einsetzkonstruktion nach Anspruch 1, dadurch gekennzeichnet, daß der Halteplattenabschnitt (26C) ein Paar von Lagerarmen bildet, die von der Fahrzeugkarosserie (30, 31) beabstandet sind und jeweils eine ebene Oberfläche aufweisen, die der Innenfläche der Fensterscheibe (20) im wesentlichen benachbart ist.

3. Einsetzkonstruktion nach Anspruch 1 oder 2, dadurch gekennzeichnet, daß das Halteelement (26) eine Polsterung (22) aufweist, die entlang der Innenfläche und der Endfläche sowie zwischen dem Halteelement (26) und der Fensterscheibe (20) verläuft.

4. Einsetzkonstruktion nach einem der Ansprüche 1 bis 3, dadurch gekennzeichnet, daß das Formteil (24) einen Basisabschnitt (24A) aufweist, der an dem Halteelement (26) befestigbar ist und einstückig mit dem Scheibenabschnitt (24B) ausgebildet ist, und daß das Formteil (24) darüber hinaus eine Kunststoffeinfassung (24C) aufweist, die an dem Scheibenabschnitt (24B) angebracht ist und mit der Außenfläche der Fensterscheibe (20) in Eingriff steht.

5. Einsetzkonstruktion nach Anspruch 4, dadurch gekennzeichnet, daß der Basisabschnitt (24A) im wesentlichen senkrecht zu dem Scheibenabschnitt (24B) verläuft.

6. Einsetzkonstruktion nach einem der Ansprüche 1 bis 5, dadurch gekennzeichnet, daß das Formteil (24) entlang des vorstehenden Plattenabschnitts (26D) und des Seitenplattenabschnitt (26B) an dem Halteelement (26) angebracht ist.

**Revendications**

1. Une structure de montage pour une vitre fixe d'ouverture dans un véhicule comportant:

— un organe de retenue (26) fixé à un chassis de véhicule (30, 31) pour supporter ladite vitre d'ouverture (20), ledit organe de retenue (26) présentant une partie de plaque de base (26A) fixée audit chassis de véhicule (30, 31) et une partie de plaque latérale (26B) s'étendant à la fois à l'extérieur à partir de ladite partie de plaque de base (26A) et entre ledit chassis de véhicule (30, 31) et ladite vitre d'ouverture (20);

— un organe d'entourage (24) susceptible d'être attaché rigidement audit organe de retenue (26) et comportant une partie de panneau (24B) espacée vers l'extérieur d'une surface extérieure de ladite vitre d'ouverture (20) pour pincer ladite vitre d'ouverture (20) et limiter son déplacement l'éloignant dudit chassis de véhicule (30, 31); et

— des moyens d'étanchéité (34) montés entre ladite vitre d'ouverture (20) et ledit chassis de véhicule (30, 31), caractérisée en ce que ledit organe de retenue (26) comporte également une partie de plaque de retenue (26C) s'étendant à partir de ladite partie de plaque latérale (26B) et alignée le long d'une surface intérieure de ladite vitre d'ouverture (20) pour limiter le déplacement de celle-ci en direction dudit chassis de véhicule (30, 31) et une partie de plaque en saillie (26D) s'étendant à partir de ladite partie de plaque latérale (26B) et se terminant le long d'une surface d'extrémité de ladite vitre d'ouverture (20) à proximité d'une jonction desdites surfaces extérieures et d'extrémité, ladite partie de plaque en saillie (26D) étant alignée le long de ladite surface d'extrémité pour empêcher ladite vitre d'ouverture (20) de glisser par rapport à ladite partie de plaque de retenue (26C), et en ce que la partie de panneau (24B) dudit organe d'entourage (24) s'étend de façon sensiblement parallèle à ladite surface extérieure de ladite vitre d'ouverture (20) de façon à minimiser la résistance aérodynamique lorsque le véhicule se déplace à des vitesses élevées; ladite vitre d'ouverture étant pincée entre ladite partie de panneau (24B) dudit organe d'entourage (24) et ladite partie de plaque de retenue (26C) dudit organe de retenue (26).

2. La structure de montage telle que définie à la revendication 1, dans laquelle ladite partie de plaque de retenue (26C) définit deux bras de support placés à distance dudit chassis de véhicule (30, 31) et présentant chacun une surface plane sensiblement adjacente à ladite surface intérieure de ladite vitre d'ouverture (20).

3. La structure de montage telle que définie à la revendication 1 ou 2, dans laquelle ledit organe de retenue (26) comporte des moyens d'amortissement (22) s'étendant le long de ladite surface intérieure et de ladite surface d'extrémité et entre ledit organe de retenue (26) et ladite vitre d'ouverture (20).

4. La structure de montage telle que définie dans l'une des revendications 1 à 3, dans laquelle ledit organe d'entourage (24) comporte une partie de base (24A) susceptible d'être fixée audit organe de retenue (26), ladite partie de base (24A) étant formée monobloc avec ladite partie de panneau (24B), ledit organe d'entourage (24) comportant également une bordure en résine (24C) fixée à ladite partie de panneau (24B) pour venir en contact avec ladite surface extérieure de ladite vitre d'ouverture (20).

5. La structure de montage telle que définie à la revendication 4, dans laquelle ladite partie de base (24A) est sensiblement perpendiculaire à ladite partie de panneau (24B).

6. La structure de montage telle que définie dans l'une des revendications 1 à 5, dans laquelle ledit organe d'entourage (24) est attaché audit organe de retenue (26) le long de ladite partie de plaque en saillie (26D) et de ladite partie de plaque latérale (26B).

28    IV    20

IV

24

_FIG. 1_

24    24B

24C

24A

_FIG. 3_

26D    26B    26C

26C    26A

26

28

_FIG.4_

1

FIG. 2

2